# EUROPÄISCHE PATENTSCHRIFT

(11) **EP 2 799 746 B1**
(45) Veröffentlichungstag und Bekanntmachung des Hinweises auf die Patenterteilung: **27.02.2019**
(21) Anmeldenummer: 14165759.3
(22) Anmeldetag: 24.04.2014
(51) Int. Cl.: F16L 29/00, E03C 1/04, F16L 27/12

(54) **Bewegungsdämpfungselement und damit ausgerüstete Teleskoprohrleitung**
Movement damping element, and telescope pipeline with the same
Élément d'amortissement de mouvement et conduite télescopique équipée de celui-ci

(30) Priorität: 03.05.2013 DE 102013208146
(43) Veröffentlichungstag der Anmeldung: 05.11.2014
(73) Patentinhaber: Hansgrohe SE, 77761 Schiltach (DE)
(72) Erfinder: Harter, Robert, 78713 Schramberg (DE)
(74) Vertreter: Patentanwälte Ruff, Wilhelm, Beier, Dauster & Partner mbB

(56) Entgegenhaltungen:
- WO-A1-2008/101528
- WO-A1-2010/076544
- DE-A1-102004 015 008
- US-A1- 2005 211 303

## Beschreibung

Die Erfindung bezieht sich auf ein Bewegungsdämpfungselement für eine fluidführende, längenveränderliche Rohrleitung und auf eine mit einem solchen Bewegungsdämpfungselement ausgerüstete, fluidführende Teleskoprohrleitung.

Fluidführende Teleskoprohrleitungen weisen zwei oder mehr teleskopartig axialbeweglich aneinander geführte Rohrstücke auf und sind dadurch in ihrer Länge veränderlich. Im Sanitärbereich ist es bekannt, eine solche Teleskoprohrleitung als wasserführende Sanitärleitung einzusetzen, beispielsweise als vertikal verlaufende Zufuhrleitung zu einer Kopfbrause einer Dusche. Durch ihre teleskopartige Ausführung kann eine solche Zufuhrleitung gleichzeitig als höhenverstellbare Kopfbrausenhalterung fungieren. Sie kann auf diese Weise kombiniert die Funktionen einer herkömmlichen Wandstange mit höhenverstellbar gehaltener Kopfbrause und einer separaten Wasserzuführung zur Kopfbrause übernehmen.

Das Verändern der Rohrleitungslänge, z.B. durch teleskopartiges Ausziehen oder Zusammenschieben von Teleskoprohrstücken, hat eine entsprechende Änderung des von der Rohrleitung eingeschlossenen Volumens zur Folge. Im Fall einer höhenverstellbaren Kopfbrause kann überschüssiges Wasser das Teleskoprohrvolumen über den Brausenaustritt verlassen. Dies kann beim Lösen einer Arretierung des Teleskoprohrs zur Folge haben, dass sich das Teleskoprohr durch sein Eigengewicht unerwünscht rasch und selbsttätig zusammenschiebt und sich die Kopfbrause nach unten bewegt, wenn der Benutzer das Teleskoprohr nicht rechtzeitig festhält.

In der Offenlegungsschrift US 2005/0211303 A1 ist ein bidirektionales Dämpferventil zum Anschließen an eine Hydraulikleitung, insbesondere als Bestandteil eines Kraftfahrzeuglenksystems, offenbart, wo es zur Verringerung von Vibrationen der vom Lenksystem gelenkten Fahrzeugräder aufgrund externer mechanischer Störungen dient. Das Dämpfungsventil beinhaltet zwei mittels einer zwischenliegenden Feder axial voneinander weg in Richtung je eines Ventilsitzes gedrückte Ventilkörper in einem das Ventil längsmittig durchquerenden Längskanal. Beide Ventilkörper sind von einer längsmittigen Bohrung durchsetzt. Beim Abheben von ihrem Ventilsitz aufgrund entsprechenden Hydraulikfluiddrucks geben sie eine jeweilige Bypassleitung zur Umgehung der Doppelventilkörperanordnung frei.

In der Offenlegungsschrift DE 10 2004 015 008 A1 ist ein Laborschrank mit einer seinen Innenraum mit einer Außenatmosphäre verbindenden Luftleitung und mit einer in der Luftleitung angeordneten Ventileinrichtung zum Druckausgleich zwischen Innenatmosphäre und Außenatmosphäre offenbart. Die Ventileinrichtung umfasst einen Ventilkörper, der in einer axial mittleren Schließstellung den Durchtrittsquerschnitt der Luftleitung verschließt und durch einen Druckunterschied zwischen Innen- und Außenatmosphäre aus der Schließstellung in die eine oder die andere axiale Richtung in eine jeweilige Offenstellung bewegbar ist.

In der Offenlegungsschrift WO 2010/076544 A1 ist eine Vorrichtung zur Dämpfung von Druckschwankungen in einer abgedichteten Kammer offenbart. Die Vorrichtung beinhaltet ein in der Kammer stationär gehaltenes und mit einer Öffnung versehenes Element und ein bewegliches flaches Element, das sich bei Normalbetrieb in einer gemeinsamen Ebene mit dem stationären Element befindet und dessen Öffnung abdeckt. Das bewegliche Element kann sich aus der Ebene herausbewegen und dadurch von der Öffnung abheben.

In der Offenlegungsschrift WO 2008/101528 A1 ist ein teleskopierbarer Wasserauslauf mit einem als Durchflussrohr dienenden Innenrohr und einem als Ausflussrohr dienenden Außenrohr offenbart, welches das Innenrohr mit Abstand unter Bildung eines Ringmantelraums umgreift. Das Innenrohr weist an seinem im Außenrohr angeordneten Stirnendbereich einen Kopf mit einem das Außenrohr innenumfangsseitig verschieblich beaufschlagenden Ringflansch auf, wobei der Innenrohrkopf an seinem Ringflansch wenigstens eine Durchflussöffnung und an seinem Kopfumfang zumindest eine im Ringmantelraum mündende Durchströmöffnung beinhaltet. Die Teleskopierbarkeit des Wasserauslaufs ist mittels einer Brems- oder Blockiereinrichtung verzöger- oder verhinderbar, die durch eine Druckveränderung im Ringmantelraum und/oder durch eine Veränderung der Relativposition von Innen- und Außenrohr aktivierbar ist und ein am Innen- oder Außenrohr gehaltenes Bremselement aufweist, das in radialer Richtung oder Querrichtung derart bewegbar oder verformbar ist, dass es das Innenrohr oder ein mit einem Armaturengrundkörper starr verbundenes Standrohr beaufschlagt.
Der Erfindung liegt als technisches Problem die Bereitstellung eines Bewegungsdämpfungselements zugrunde, mit dem sich für eine solche sanitäre Teleskoprohrleitung oder eine andere fluidführende, längenveränderliche Rohrleitung das in der Rohrleitung befindliche Fluid in einer vorteilhaften Weise dazu nutzen lässt, eine Dämpfung für die Längenänderungsbewegung der Rohrleitung bereitzustellen. Eine weitere Aufgabe der Erfindung besteht darin, eine fluidführende Teleskoprohrleitung mit einer entsprechenden Bewegungsdämpfung bereitzustellen.
Die Erfindung löst dieses Problem durch die Bereitstellung eines Bewegungsdämpfungselements mit den Merkmalen des Anspruchs 1 und einer fluidführenden Teleskoprohrleitung mit den Merkmalen des Anspruchs 8.

Das erfindungsgemäße Bewegungsdämpfungselement weist einen vom in der Rohrleitung geführten Fluid durchströmten Grundkörper sowie einen von einem Druck des in der Rohrleitung geführten Fluids betätigten Ventilkörper auf, der zwischen einer Dämpfungsstellung und einer Freigabestellung beweglich am Grundkörper gehalten ist. Dabei gibt er in der Freigabestellung einen größeren Durchströmquerschnitt des Grundkörpers frei als in der Dämpfungsstellung.

Wenn die mit diesem Bewegungsdämpfungselement ausgerüstete Rohrleitung in ihrer Länge verändert wird und sich dadurch das Rohrleitungsvolumen ändert, strömt darin befindliches Fliud durch den Grundkörper des Bewegungsdämpfungselements hindurch. Befindet sich der Ventilkörper in seiner Dämpfungsstellung, ist der Durchströmquerschnitt des Grundkörpers kleiner als in der Freigabestellung des Ventilkörpers. Dies ermöglicht die Bereitstellung eines erhöhten, dämpfenden Widerstands gegenüber der Längenänderungsbewegung der Rohrleitung, solange sich der Ventilkörper in der Dämpfungsstellung befindet. Befindet sich der Ventilkörper in seiner Freigabestellung, dann stellt der Grundkörper einen größeren Durchströmquerschnitt für das Fluid bereit, durch den das Fluid den Grundkörper mit einer in einem normalen Betrieb der Rohrleitung gewünschten Durchflussrate passieren kann.

Bei Verwendung des erfindungsgemäßen Bewegungsdämpfungselements in einer vertikalen Kopfbrausen-Teleskoprohrleitung einer Dusche lässt sich damit beispielsweise ein zu leichtes und damit zu schnelles Abwärtsbewegen einer mit dieser Teleskoprohrleitung höhenbeweglich gehaltenen Kopfbrause vermeiden, indem sich der Ventilkörper dann in seiner Dämpfungsstellung befindet. Andererseits lässt der Grundkörper bei längenfixierter Teleskoprohrleitung das Wasser in gewünschter Menge zur Kopfbrause durch, indem sich sein Ventilkörper dann in der Freigabestellung befindet. Dabei wird der Ventilkörper selbsttätig durch den Druck des Fluids in der Rohrleitung betätigt, insbesondere von seiner Dämpfungsstellung in seine Freigabestellung bewegt und in dieser gehalten, so dass ein anderweitiges Ventilkörperbetätigungsmittel zwar optional vorgesehen sein kann, aber nicht zwingend vorhanden sein muss.

Gemäß der Erfindung weist der Grundkörper einen Mittenkörper und einen Außenkörper mit einem zwischenliegenden Ringkanal auf. Der Ventilkörper ist als ein im Ringkanal axialbeweglich angeordneter Ventilring ausgebildet, der in seiner Freigabestellung den Ringkanal mit größerem Durchströmquerschnitt freigibt als in seiner Dämpfungsstellung.

In einer Weiterbildung der Erfindung ist der Ventilkörper axialbeweglich zwischen der Dämpfungsstellung und je einer Freigabestellung auf jeder der beiden axialen Seiten der Dämpfungsstellung am Grundkörper gehalten. Der Ventilkörper kann in diesem Fall bei entsprechend auftretendem Fluiddruck in jeder der zwei entgegengesetzten Axialrichtungen von seiner Dämpfungsstellung in die jeweilige Freigabestellung bewegt werden.

In einer Weiterbildung der Erfindung weist das Bewegungsdämpfungselement ein Ventilrückstellmittel auf, das eine elastische Rückstellkraft gegen eine Bewegung des Ventilkörpers aus seiner Dämpfungsstellung in Richtung Freigabestellung bereitstellt. Die Dämpfungsstellung definiert damit eine Ausgangsstellung, in der sich der Ventilkörper befindet, solange kein ihn daraus wegbewegender Fluiddruck wirkt. Ist ein solcher Fluiddruck vorhanden, kann er den Ventilkörper gegen die Kraft des Ventilrückstellmittels in seine Freigabestellung bringen. Lässt der Fluiddruck wieder nach, gelangt der Ventilkörper unterstützt vom Ventilrückstellmittel wieder selbsttätig in seine Dämpfungsstellung.

In einer Ausgestaltung der Erfindung ist der Ventilring axialbeweglich am Mittenkörper gehalten. Der Mittenkörper kann so zur Führung des Ventilrings dienen.

In einer weiteren Ausgestaltung beeinhaltet das Ventilrückstellmittel wenigstens eine am Mittenkörper angeordnete Schraubenfeder. Durch die Schraubenfeder kann der Ventilring federelastisch in seiner Dämpfungsstellung gehalten werden.

In einer anderweitigen Ausgestaltung hält der Ventilkörper in seiner Dämpfungsstellung den Ringkanal vollständig geschlossen oder mit reduziertem Durchströmquerschnitt teiloffen. Dies kann je nach Anwendungsfall dazu dienen, den Fluidfluss im Ringkanal vollständig zu unterbinden oder noch einen gewissen reduzierten Fluidfluss durch selbigen hindurch zuzulassen, wenn sich der Ventilkörper in seiner Dämpfungsstellung befindet.

In noch einer anderen Ausgestaltung ist im Mittenkörper ein vom Ventilkörper unbeeinflusster Mittenkanal ausgebildet, der strömungstechnisch parallel zum Ringkanal ist. Dadurch kann ein gewisser reduzierter Fluidfluss durch das Bewegungsdämpfungselement hindurch über den Mittenkanal aufrechterhalten werden, selbst wenn der Ringkanal durch den in seiner Dämpfungsstellung befindlichen Ventilkörper ganz oder weitestgehend abgesperrt ist.

In einer Weiterbildung der Erfindung ist die Teleskoprohrleitung als sanitäre Kopfbrausenleitung ausgebildet, wobei das Bewegungsdämpfungselement vorteilhaft an einem Teleskopende eines inneren der teleskopartig aneinander geführten Rohrstücke oder an einem Kopfbrausenanschlussende der Kopfbrausenleitung angeordnet ist.

Vorteilhafte Ausführungsformen der Erfindung sind in den Zeichnungen dargestellt und werden nachfolgend beschrieben. Hierbei zeigen:
- Fig. 1: eine Längsschnittansicht eines Bewegungsdämpfungselements,
- Fig. 2: eine Detailansicht eines Bereichs II von Fig. 1,
- Fig. 3: eine Perspektivansicht des Bewegungsdämpfungselements von Fig. 1 von einer ersten Stirnsseite her,
- Fig. 4: eine Perspektivansicht des Bewegungsdämpfungselements von Fig. 1 von einer zweiten Stirnseite her,
- Fig. 5: eine teilweise geschnittene Vorderansicht einer teleskopartig höhenverstellbaren, mit dem Bewegungsdämpfungselement der Fig. 1 bis 4 ausgerüsteten Kopfbrausenleitung eines Duschsystems,
- Fig. 6: eine Detailschnittansicht eines geschnitten gezeigten Bereichs VI von Fig. 5,
- Fig. 7: eine perspektivische Seitenansicht einer anderen, mit dem Bewegungsdämpfungselement der Fig. 1 bis 4 ausgerüsteten Kopfbrausenleitung eines Duschsystems,
- Fig. 8: eine Detailschnittansicht eines Bereichs VIII von Fig. 7,
- Fig. 9: eine Längsschnittansicht einer Variante des Bewegungsdämpfungselements der Fig. 1 bis 4 mit zusätzlichem Mittenkanal,
- Fig. 10: eine Detailansicht eines Bereichs X von Fig. 9,
- Fig. 11: eine Perspektivansicht entsprechend Fig. 3 für die Variante von Fig. 9 und
- Fig. 12: eine Perspektivansicht entsprechend Fig. 4 für die Variante von Fig. 9.

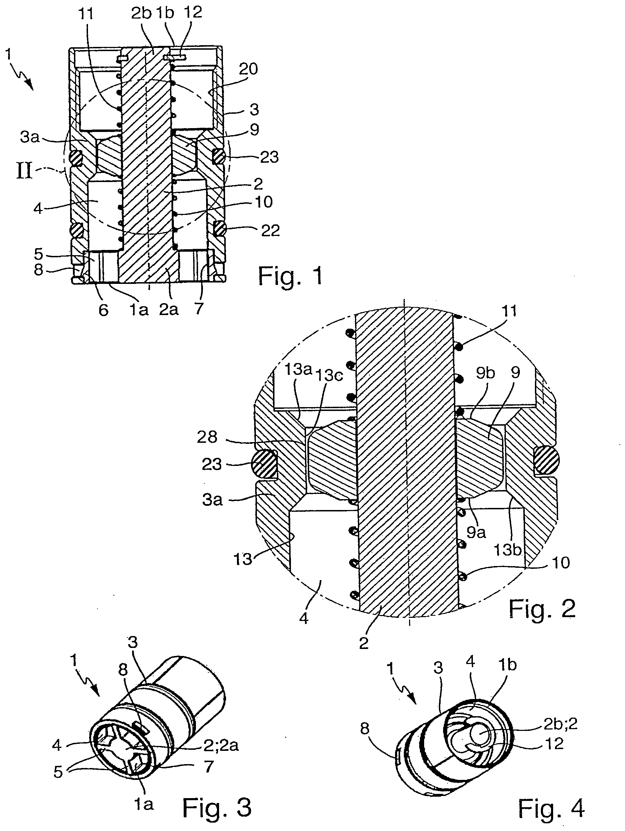

Ein in den Fig. 1 bis 4 veranschaulichtes Bewegungsdämpfungselement 1 weist einen Grundkörper auf, der einen Mittenkörper 2 und einen diesen unter Bildung eines zwischenliegenden Ringkanals 4 umgebenden Außenkörper 3 beinhaltet. Im gezeigten Beispiel ist der Mittenkörper 2 als ein langgestrecktes, vollzylindrisches Bauteil ausgebildet, das vom hohlzylindrisch gestalteten Außenkörper 3 unter Belassung des besagten Ringkanals 4 koaxial umgeben ist. In einem Kopfbereich 2a auf einer ersten Stirnseite 1a des Bewegungsdämpfungselements 1 weist der Mittenkörper 2 radiale Stege 5 auf, die seinen Zylinderkörper mit einem ihn im Kopfbereich 2a koaxial umgebenden Haltering 7 verbinden, der an seinem Außenumfang mit Rastnasen 6 versehen ist. Korrespondierend dazu ist der zylindrische Außenkörper 3 mit einer stirnseitig eingebrachten Ausnehmung zum Aufnehmen des Halterings 7 und mit Rastöffnungen 8 im Bereich dieser Ausnehmung versehen, in welche die Rastnasen 6 einrasten können, woduch der Mittenkörper 2 am Außenkörper 3 verrastet gehalten ist.

Am Mittenkörper 2 ist axialbeweglich ein ringförmiger Ventilkörper 9 gehalten, wozu der Ventilkörper 9 eine Mittenbohrung aufweist, durch die sich der Mittenkörper 2 hindurch erstreckt. Der Ventilkörper 9 ist in den Fig. 1 und 2 in einer Dämpfungsstellung gezeigt, aus der er in beiden Axialrichtungen in eine jeweilige Freigabestellung heraus bewegbar ist. Auf beiden Axialseiten stützt sich der Ventilring 9 mit seiner jeweiligen Stirnseite 9a, 9b an je einer den Mittenkörper 2 umgebenden Schraubenfeder 10, 11 ab. Die in den Fig. 1 und 2 untere Schraubenfeder 10 stützt sich andererseits am Kopfbereich 2a bzw. den Stegen 5 des Mittenkörpers 2 ab. Die in den Fig. 1 und 2 obere Schraubenfeder 11 stützt sich andererseits an einem Sprengring 12 ab, der auf einen dortigen Fußendbereich 2b des Mittenkörpers 2 aufgesetzt ist. Dieser Fußendabschnitt 2b befindet sich an einem dem ersten Stirnende 1a gegenüberliegenden zweiten Stirnende 1b des Grundkörpers 2, 3. Die Stirnenden 1a, 1b bilden eine Eintrittsseite und eine Austrittsseite des Grundkörpers, an welchen im Betrieb des Bewegungsdämpfungselements ein das Bewegungsdämpfungselement 1 passierendes Fluid in den Grundkörper 2, 3, d.h. speziell in den Ringkanal 4, eintritt bzw. austritt.

Die beiden Schraubenfedern 10, 11 halten den Ventilkörper 9 in der besagten Dämpfungsstellung, die somit eine Ruhestellung bzw. Ausgangsstellung darstellt, die der Ventilkörper 9 einnimmt, wenn keine ihn aus dieser Dämpfungsstellung herausbewegende Fluiddruckkraft einwirkt. In dieser Dämpfungsstellung liegt der Ventilkörper 9 innerhalb eines verengten Abschnitts 3a des Außenkörpers 3. Dieser verengte Abschnitt 3a ist dadurch gebildet, dass sich eine Innenwandung 13 des hohlzylindrischen Außenkörpers 3 in diesem Bereich über zwei beidseitige konische Wandabschnitte 13a, 13b auf einen Ventilabschnitt 13c verjüngt, in welchem sie einen verringerten Innendurchmesser hat, der nur noch geringfügig größer als der Außendurchmesser des Ventilrings 9 ist. Dies hat zur Folge, dass der Ringkanal 4 in diesem Ventilabschnitt 13c des Grundkörpers 2, 3 bis auf einen schmalen Ringspalt 28 verengt ist, der zwischen dem Außenumfang des Ventilrings 9 und dem Innenumfang des Ventilabschnitts 13c des Außenkörpers 3 gebildet ist. Der schmale Ringspalt 28 stellt somit einen minimalen Durchströmquerschnitt des Bewegungsdämpfungselements 1 dar, der vorliegt, wenn sich der Ventilkörper 9 in seiner Dämpfungsstellung befindet.

Die beiden Stirnseiten 9a, 9b des Ventilkörpers 9 bilden einen Fluidbeaufschlagungsbereich, über den Druckkräfte des im Ringkanal 4 befindlichen Fluids auf den Ventilkörper 9 einwirken können, um ihn gegebenenfalls aus seiner Dämpfungsstellung heraus in der einen oder der anderen Axialrichtung gegen die elastische Rückstellkraft der einen und/oder anderen Schraubenfeder 10, 11 zu bewegen. Dies geschieht dann, wenn die auf den Ventilkörper 9 einwirkende Kraft aufgrund einer Fluiddruckdifferenz zwischen der einen und der anderen Axialseite des Ventilkörpers 9 größer als die rückstellende Federkraft wird. Sobald sich aufgrund einer derartigen Fluiddruckkraft der Ventilkörper 9 in der einen oder anderen Axialrichtung aus dem Bereich des verengten Ventilabschnitts 13c des Außenkörpers 3 herausbewegt, gibt er den Ringkanal 4 mit einem gegenüber dem schmalen Ringspalt 28 deutlich vergrößerten Durchströmquerschnitt frei, der durch die Ringfläche zwischen dem Ventilkörper 9 einerseits und dem radial erweiterten Bereich der Außenkörper-Innenwand 13 außerhalb ihres verengten Ventilabschnitts 13c gebildet ist. Nachstehend wird detaillierter auf typische entsprechende Betriebssituationen am Beispiel eines Kopfbrausen-Duschsystems eingegangen, das mit einem solchen Bewegungsdämpfungselement ausgerüstet ist.

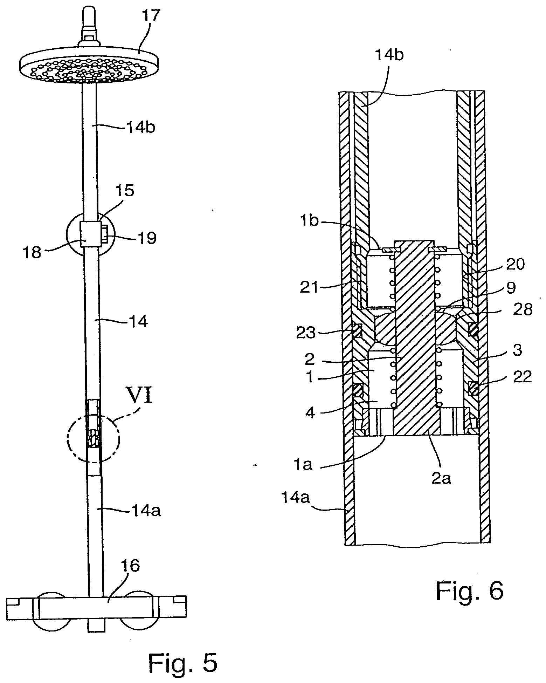

Die Fig. 5 und 6 veranschaulichen hierzu ein Ausführungsbeispiel eines Kopfbrausensystems mit einer teleskopartig längenveränderlichen Kopfbrausenleitung, die im Wesentlichen vertikal verlaufend über eine Wandhalterung 15 an einer Duschwand befestigt werden kann und mit einem unteren, eintrittsseitigen Endabschnitt an eine übliche Mischerarmatur 16 eines Duschsystems angeschlossen ist. An ihrem oberen, austrittsseitigen Ende trägt die Teleskoprohrleitung 14 eine übliche Kopfbrause 17.

Die Teleskoprohrleitung 14 beinhaltet zwei teleskopartig aneinander geführte Rohrstücke, von denen sich ein äußeres Rohrstück 14a von der Mischerarmatur 16 bis zur Wandhalterung 15 erstreckt. In diesem ist ein inneres Rohrstück 14b axialbeweglich geführt, das im Bereich der Wandhalterung 15 aus dem äußeren Rohrstück 14a austritt und an seinem freien, abgebogenen oberen Endabschnitt die Kopfbrause 17 hält. Die Wandhalterung 15 verdeckt mit einer Klemmhülse 18 den Übergang der beiden Teleskoprohrstücke 14a, 14b und weist einen Feststell-Drehknopf 19 auf, mit dem das obere Rohrstück 14b in einer gewünschten, variablen, aus dem äußeren Rohrstück 14a nach oben herausstehenden Länge und damit einer gewünschten Höhe der Kopfbrause 17 fixiert werden kann.

Zur Höhenverstellung der Kopfbrause 17 löst der Benutzer diese Fixierung über den Drehknopf 19, schiebt das innere Rohrstück 14b weiter nach oben aus dem äußeren Rohrstück 14a heraus oder weiter in selbiges nach unten hinein, um die Kopfbrause 17 höher bzw. tiefer zu stellen, und fixiert dann wieder die neue Lage des inneren Rohrstücks 14b im äußeren Rohrstück 14a über den Drehknopf 19. Um ein zu schnelles Abwärtsbewegen der Kopfbrause 17 zu vermeiden, wenn die Fixierung durch den Feststellknopf 19 gelöst wird und der Benutzer hierbei die Kopfbrause 17 oder das obere Rohrstück 14b nicht festhält, ist die Kopfbrausen-Teleskoprohrleitung 14 mit dem Bewegungsdämpfungselement 1 gemäß den Fig. 1 bis 4 ausgerüstet. Dazu weist der Außenkörper 3 des Bewegungsdämpfungselements 1 auf einer dem Mittenkörper-Haltering 7 abgewandten Seite ein Innengewinde 20 auf, mit dem das Bewegungsdämpfungselement 1 auf ein korrespondierendes Außengewinde 21 aufgeschraubt ist, das am Außenumfang des im äußeren Rohrstück 14a aufgenommenen, unteren Endes des inneren Rohrstücks 14b ausgebildet ist. Mit dem Außenumfang seines Außenkörpers 3 liegt das Bewegungsdämpfungselement 1 eng, aber axial beweglich gegen die Innenwandung des äußeren Rohrstücks 14a an. Zwei mit axialem Abstand am Außenumfang des Außenkörpers 3 angebrachte Ringdichtungen 22, 23 dichten das Bewegungsdämpfungselement 1 nach außen gegenüber dem äußeren Rohrstück 14a ab.

Die Fig. 5 und 6 zeigen das Bewegungsdämpfungselement 1 mit dem Ventilkörper 9 in seiner Dämpfungsstellung. Diese Ausgangsstellung liegt vor, wenn die Wasserzufuhr an der Mischerarmatur 16 abgesperrt ist. Wenn ausgehend von dieser Situation der Benutzer die Wasserzufuhr an der Mischerarmatur 16 öffnet, steigt der Wasserdruck auf der Zufuhrseite des an die Mischerarmatur 16 angekoppelten äußeren Rohrstücks 14a an. Dieser eintrittsseitige Anstieg des Wasserdrucks drückt den Ventilkörper 9 aus seiner gezeigten Dämpfungsstellung heraus axial nach oben in die entsprechende obere Freigabestellung. In dieser gibt der Ventilkörper 9 den Ringkanal 4 des Bewegungsdämpfungselements 1 mit dem vergrößerten Durchströmquerschnitt frei, so dass das Duschwasser in gewünschter Menge zur Kopfbrause 17 gelangt. Der Wasserdruck hält den Ventilkörper 9 in dieser oberen Freigabestellung, solange die Wasserzufuhr an der Mischerarmatur 16 geöffnet ist.

Wenn der Benutzer die Wasserzufuhr an der Mischerarmatur 16 absperrt, sinkt der eingangsseitige Wasserdruck in der Teleskoprohrleitung 14 wieder ab, das Wasser bleibt in der Teleskoprohrleitung 14 stehen, und der Ventilkörper 9 kehrt dadurch in seine Dämpfungsstellung 9 unterstützt durch die Rückstellfedern 10, 11 zurück. Das unterhalb des Ventilkörpers 9 im unteren Teil des äußeren Rohrstücks 14a befindliche Wasser und das über dem Ventilkörper 9 im inneren Rohrstück 14b stehende Wasser bleiben über den schmalen Ringspalt 14 in Verbindung, der noch einen reduzierten, geringfügigen Wasserdurchfluss zulässt.

Wenn der Benutzer bei abgesperrter Wasserzufuhr die Kopfbrause 17 verstellen will und dazu die Teleskoprohrfixierung über den Drehknopf 19 löst, drückt das frei gewordene innere Rohrstück 14b mit seinem Gewicht einschließlich demjenigen der Kopfbrause 17, nach unten. Das Bewegungsdämpfungselement 1 dämpft eine Abwärtsbewegung des inneren Rohrstücks 14b samt Kopfbrause 17. Denn die Abwärtsbewegung des inneren Rohrstücks 14b schiebt selbiges weiter in das äußere Rohrstück 14a hinein und verkürzt insgesamt die Länge der Teleskoprohrleitung 14 und insbesondere auch die Länge der Wassersäule im unteren Teil des äußeren Rohrstücks 14a unterhalb des Bewegungsdämpfungselements 1. Diese Wassersäule wirkt dem Zusammenschieben der beiden Rohrstücke 14a, 14b entgegen, da mit der Abwärtsbewegung des inneren Rohrstücks 14b samt Bewegungsdämpfungselement 1 ein entsprechendes Wasservolumen verdrängt, d.h. durch das Bewegungsdämpfungselement 1 hindurchgeleitet werden muss. Dies kann jedoch nur über den schmalen Ringspalt 14 und somit sehr langsam erfolgen.

Dies bedeutet, dass beim Lösen der Teleskoprohrfixierung das innere Rohrstück 14b allenfalls langsam in das äußere Rohrstück 14a nach unten gleiten kann, ein rasches Abwärtsbewegen der Kopfbrause 17 wird vermieden. Der Benutzer kann diese selbstätige Abwärtsbewegung unterstützen, indem er das innere, obere Rohrstück 14b bzw. die Kopfbrause 17 greift und aktiv nach unten drückt. Dadurch kann er den auf den Ventilkörper 9 wirkenden Differenzdruck zwischen dem von unten und dem von oben auf den Ventilkörper 9 wirkenden Wasser so erhöhen, dass sich der Ventilkörper 9 relativ zum Grundkörper 2, 3 des Bewegungsdämpfungselements 1 nach oben in Richtung seiner oberen Freigabestellung bewegt und wieder einen verglichen mit dem schmalen Ringspalt 28 deutlich größeren Durchströmquerschnitt freigibt. Dadurch kann das Wasser unterhalb des Bewegungsdämpfungselements wieder schneller verdrängt, d.h. nach oben durch das Bewegungsdämpfungselement 1 hindurchgeführt werden. Dies erlaubt dem Benutzer ein gegenüber der selbsttätigen passiven Abwärtsbewegung schnelleres Abwärtsbewegen der Kopfbrause 17.

Wenn der Benutzer die Kopfbrause 17 nach oben verstellen will, greift er das obere Rohrstück 14b bzw. die Kopfbrause 17 und zieht das innere Rohrstück 14b nach oben. Wenn er mit ausreichend großer Zugkraft zieht, erhöht sich der Wasserdifferenzdruck am Ventilkörper 9 gegensinnig zum oben erläuterten Fall der Kopfbrausenabwärtsbewegung derart, dass sich der Ventilkörper 9 relativ zum Grundkörper 2, 3 des Bewegungsdämpfungselements 1 nach unten in Richtung seiner unteren Freigabestellung bewegt, d.h. in Richtung Kopfteil 2a des Mittenkörpers 2. Dies hat wiederum zur Folge, dass der Ventilkörper 9 den Ringkanal 4 mit einem gegenüber dem schmalen Ringspalt 28 deutlich erhöhten Durchströmquerschnitt freigibt, wodurch der Widerstand des in der Teleskoprohrleitung 14 stehenden Wassers gegenüber dieser Verlängerung der Teleskoprohrleitung 14 abnimmt. Der Benutzer kann dann die Kopfbrause 17 relativ zügig nach oben verschieben, ohne gegen die Dämpfung durch das Bewegungsdämpfungselement 1 arbeiten zu müssen.

Aus den vorstehenden Ausführungen zur Funktionsweise des Bewegungsdämpfungselements 1 in den verschiedenen Betriebssituationen lässt sich erkennen, dass es für die gewünschte und beschriebene Funktionalität des Bewegungsdämpfungselements 1 nicht entscheidend darauf ankommt, dass es wie im Beispiel der Fig. 5 und 6 am unteren Ende des inneren Teleskoprohrstücks 14b angeordnet ist. Es erfüllt seine Funktion in analoger Weise auch dann, wenn es an irgendeiner anderen Stelle entlang der Länge der Teleskoprohrleitung 14 positioniert ist.

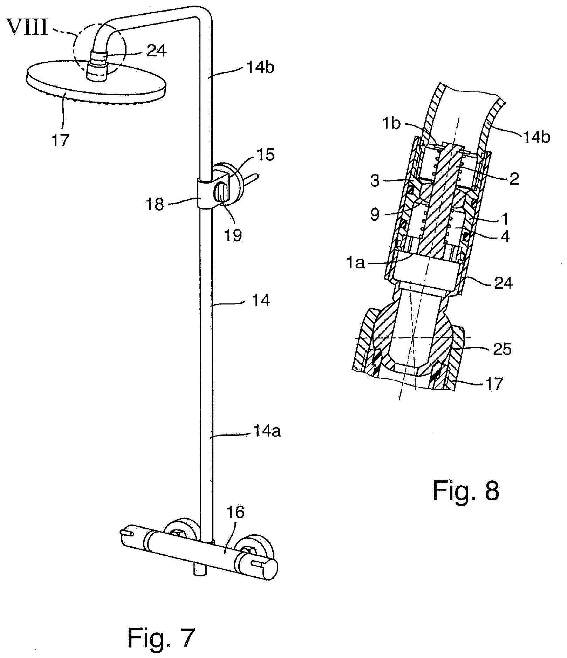

Die Fig. 7 und 8 zeigen ein entsprechend hinsichtlich der Positionierung des Bewegungsdämpfungselements 1 modifiziertes Ausführungsbeispiel, wobei im Übrigen für identische und funktionell äquivalente Elemente gleiche Bezugszeichen wie beim Ausführungsbeispiel der Fig. 5 und 6 verwendet sind und insoweit auf deren obige Beschreibung verwiesen werden kann.

Speziell ist das Bewegungsdämpfungselement 1 bei diesem Ausführungsbeispiel mit seinem Grundkörper 2, 3 fest in ein hülsenförmiges Brausenanschlussstück 24 eingefügt, das austrittsseitig in einen Kugelkopf 25 zur kugelgelenkigen Ankopplung der Kopfbrause 17 übergeht und in das eintrittsseitig das zugehörige, obere Ende des inneren Teleskoprohrstücks 14b eingefügt ist. Dabei kann das innere Rohrstück 14b an diesem Endbereich wiederum mit einem Außengewinde versehen sein, auf das welches das Bewegungsdämpfungselement 1 mit seinem am Außenkörper 3 vorgesehenen Innengewinde 20 aufgeschraubt ist. Alternativ ist jede andere herkömmliche, fluiddichte Ankopplung des Rohrstücks 14b an das Anschlussstück 24 bzw. das Bewegungsdämpfungselement 1 verwendbar.

Das Bewegungsdämpfungselement 1 ist bei diesem Ausführungsbeispiel so eingebaut, dass es mit seinem Mittenkörper-Kopfteil 2a der Kopfbrause 17 zugewandt ist, d.h. die axiale Stirnseite 1a, die beim Ausführungsbeispiel der Fig. 5 und 6 die Eintrittsseite des Bewegungsdämpfungselements 1 bildet, fungiert hier als dessen Austrittsseite, und analog fungiert die andere Stirnseite 1b des Bewegungsdämpfungselements 1 im Fall der Fig. 7 und 8 als Eintrittsseite. Da der Ventilkörper 9 durch die bezüglich des verengten Ventilsitzabschnitts 13c im Wesentlichen symmetrische Gestaltung des Außenkörpers 3 und die beidseits angeordneten Schraubenfedern 10, 11 quasi symmetrisch in jedes seiner beiden Freigabestellungen beidseits der mittigen Dämpfungsstellung bewegt werden kann, bleibt die Funktionalität des Bewegungsdämpfungselements 1 weitestgehend unbeeinflusst davon, in welcher der beiden möglichen Positionen das Bewegungsdämpfungselement 1 in die betreffende Rohrleitung eingebaut wird.

Demgemäß entsprechen die Funktionen des Bewegungsdämpfungselements 1 in der Einbaulage der Fig. 7 und 8 den oben erläuterten Funktionen in seiner Einbaulage der Fig. 5 und 6. Fig. 8 zeigt das Bewegungsdämpfungselement 1 wiederum mit dem Ventilkörper 9 in seiner mittigen Dämpfstellungstellung bei abgesperrter Wasserzufuhr. Wenn der Benutzer ausgehend davon die Teleskoprohrfixierung löst, drückt das innere Rohrstück 14b wiederum schwerkraftbedingt nach unten. Einer zu raschen Abwärtsbewegung und der damit einhergehenden Längenverkürzung der Teleskoprohrleitung 14 wirkt die in der gesamten Teleskoprohrleitung 14 bis zum endseitig angeordneten Bewegungsdämpfungselement 1 stehende Wassersäule entgegen. Das durch die Längenverkürzung zu verdrängende Wasservolumen muss, wie auch beim Ausführungsbeispiel der Fig. 5 und 6, über die Kopfbrause 17 aus der Teleskoprohrleitung 14 abgeführt werden, wozu es das Bewegungsdämpfungselement 1 passieren muss. Da sich dieses in seiner Dämpfungsstellung befindet, in welcher es mit seinem Ventilkörper 9 den Ringkanal 4 bis auf den schmalen Ringspalt 28 verschließt, kann dieses Wasser nur relativ langsam verdrängt werden, was die Abwärtsbewegung des inneren Rohrstücks 14b samt Kopfbrause 17 bremst, wie oben zum Ausführungsbeispiel der Fig. 5 und 6 beschrieben.

Wie beim Beispiel der Fig. 5 und 6 kann der Benutzer die Abwärtsbewegung beschleunigen, indem er das innere Rohrstück 14b aktiv nach unten drückt. Dies erhöht den Druck des in der Teleskoprohrleitung 14 stehenden Wassers und damit den Druck dieser Wassersäule auf den Ventilkörper 9. Der Ventilkörper 9 gelangt durch diesen erhöhten Wasserdruck in der Teleskopfrohrleitung 14 aus seiner Dämpfungsstellung heraus in seine dem Mittenkörper-Kopfteil 2a zugewandte, untere Freigabestellung und gibt daraufhin den größeren Freigabe-Durchströmquerschnitt frei, so dass der Benutzer die Kopfbrause 17 mit dem inneren Rohrstück 14b relativ zügig nach unten bewegen kann. Wenn der Benutzer die Kopfbrause 17 nach oben verschieben will, zieht er das innere Rohrstück 14b nach oben. Dadurch entsteht in der Teleskoprohrleitung 14 ein Unterdruck, durch den sich der Ventilkörper 9 aus seiner Dämpfungsstellung in seine dem Fußteil 2b des Mittenkörpers zugewandte, andere Freigabestellung bewegt. Wiederum kann der Benutzer dann die Kopfbrause 17 relativ leicht und zügig nach oben verschieben.

Wenn der Benutzer bei fixierter Teleskoprohrleitung 14 die Wasserzufuhr an der Mischerarmatur 16 öffnet, steigt der Wasserdruck in der Teleskoprohrleitung 14 an und drückt den Ventilkörper 9 aus seiner Dämpfungsstellung in die dem Kopfteil 2a des Mittenkörpers 2 zugewandte, untere Freigabestellung, in der er den Ringkanal 4 mit dem erhöhten Durchströmquerschnitt für den normalen Duschbetrieb freigibt, bis der Benutzer die Wasserzufuhr wieder absperrt.

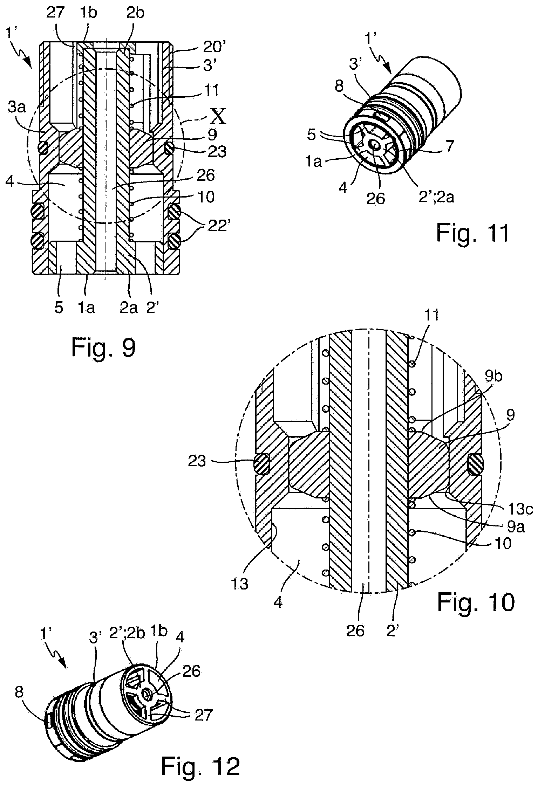

Die Fig. 9 bis 12 veranschaulichen eine Variante 1' des Bewegungsdämpfungselements 1 der Fig. 1 bis 4, wobei wiederum für identische und funktionell äquivalente Elemente der Übersichtlichkeit halber gleiche Bezugszeichen verwendet sind und insoweit auf die obige Beschreibung zu den Fig. 1 bis 4 verwiesen werden kann. Das Bewegungsdämpfungselement 1' ist in gleicher Weise verwendbar wie das Bewegungsdämpfungselement 1 der Fig. 1 bis 4, insbesondere in Kopfbrausen-Teleskoprohrleitungen von Duschsystemen, wie für das Bewegungsdämpfungselement 1 in den Fig. 5 bis 8 gezeigt.

Das Bewegungsdämpfungselement 1' der Fig. 9 bis 12 weist einen Außenkörper 3' auf, an dem ein Außengewinde 20' ausgebildet ist, mit dem es in ein Innengewinde eines entsprechenden Rohrstückendes einschraubbar ist, z.B. eines inneren Rohrstücks einer Teleskoprohrleitung, das in diesem Fall mit einem Innengewinde statt wie im Beispiel der Fig. 5 und 6 mit einem Außengewinde versehen ist. In einem gegenüberliegenden Außenumfangsbereich ist der Außenkörper 3' unter Bildung einer Ringsschulter radial verbreitert und im verbreiterten Bereich mit einem Paar von Dichtungsringen 22' versehen, mit dem er beim Einbau in eine Teleskoprohrleitung abdichtend gegen die Innenwand eines äußeren Teleskoprohrs anliegt, in welchem das auf das Außengewinde 20' aufgeschraubte innere Teleskoprohrstück geführt ist.

Des Weiteren beinhaltet das Bewegungsdämpfungselement 1' einen modifizierten Mittenkörper 2', der in diesem Fall als zylindrisches Element mit einer durchgehenden Mittenbohrung 26 ausgeführt ist. An seinem Fußbereich 2b ist dieser Mittenkörper 2' durch radiale Stege 27 am Außenkörper 3' gehalten.

Die durchgehende Mittenbohrung 26 des Mittenkörpers 2' bildet einen vom Ventilkörper 9 unbeeinflusst bleibenden, zweiten Durchströmungskanal des Bewegungsdämpfungselements 1' zusätzlich zum vom Ventilkörper 9 beeinflussten Ringkanal 4. Er kann dadurch funktionell an die Stelle des schmalen Ringspalts 28 beim Ausführungsbeispiel der Fig. 1 bis 4 treten. Der Ventilkörper 9 und der verengte Ventilabschnitt 13c des Außenkörpers 3' sind daher beim Bewegungsdämpfungselement 1' der Fig. 9 bis 12 so aufeinander abgestimmt, dass der Ventilkörper 9 in seiner Dämpfungsstellung den Ringkanal 4 im Ventilabschnitt 13c praktisch vollständig verschließt bzw. absperrt. Mit anderen Worten entspricht in diesem Ausführungsbeispiel der Außendurchmesser des Ventilkörpers 9 dem Innendurchmesser des verengten Ventilabschnitts 13c, wobei der Ventilkörper 9 axial gegenüber dem Außenkörper 3' beweglich bleibt. Wie im Ausführungsbeispiel der Fig. 1 bis 4 ist der Ventilkörper 9 axialbeweglich am Mittenkörper 2' geführt.

In seiner Funktionsweise und in den damit erzielten vorteilhaften Wirkungen und Anwendungsmöglichkeiten entspricht das Bewegungsdämpfungselement 1' demjenigen der Fig. 1 bis 4, so dass insoweit auf die diesbezüglichen obigen Ausführungen verwiesen werden kann.

Wie die obige Beschreibung vorteilhafter Ausführungsbeispiele deutlich macht, stellt die Erfindung ein Bewegungsdämpfungselement für fluidführende, längenveränderliche Rohrleitungen zur Verfügung, das sich vorteilhaft für Teleskoprohrleitungen von Duschsystemen verwenden lässt. Es versteht sich, dass die Erfindung neben den gezeigten Beispielen weitere Ausführungsformen umfasst. Beispielsweise ist der Ventilkörper in alternativen Ausführungsformen der Erfindung aus seiner Dämpfungsstellung heraus nur in einer Axialrichtung in eine zugehörige Freigabestellung bewegbar. Derartige Ausführungsformen eignen sich für Anwendungen, in denen keine beidseitige Verschiebbarkeit des Ventilkörpers aus seiner Dämpfungsstellung heraus in jeweils eine von zwei Freigabestellungen erforderlich ist. Dies ist beispielsweise für Rohrleitungssysteme ausreichend, bei denen eine Fluiddruckdifferenz, mit welcher der Ventilkörper in seine Freigabestellung bewegt werden soll, immer nur in einer Richtung und nicht in beiden Axialrichtungen auftritt.

In weiteren alternativen Ausführungsformen der Erfindung ist der Ventilkörper nicht als ringförmiges Ventilelement an einem Mittenkörper geführt, sondern ist als massiver Ventilkörper ausgeführt, der in einer anderen, herkömmlichen Weise an einem passend gestalteten Grundkörper mit Ventilsitz geführt ist.

Es versteht sich, dass das erfindungsgemäße Bewegungsdämpfungselement nicht nur für Teleskoprohrleitungen von Duschsystemen verwendbar ist, sondern auch in gleicher Weise für andere Teleskoprohrsysteme und andere längenveränderliche Rohrleitungssysteme, bei denen Bedarf besteht, die Längenveränderung der Rohrleitung dämpfen zu können.

## Patentansprüche

1. Bewegungsdämpfungselement für eine fluidführende, längenveränderliche Rohrleitung (14), mit
- einem vom in der Rohrleitung geführten Fluid durchströmten Grundkörper (2, 3) und
- einem von einem Druck des in der Rohrleitung geführten Fluids betätigten Ventilkörper (9), der zwischen einer Dämpfungsstellung und einer Freigabestellung, in der er verglichen mit der Dämpfungsstellung einen größeren Durchströmquerschnitt des Grundkörpers freigibt, beweglich am Grundkörper gehalten ist,
- wobei der Grundkörper einen Mittenkörper (2) und einen den Mittenkörper unter Bildung eines zwischenliegenden Ringkanals (4) umgebenden Außenkörper (3) aufweist und der Ventilkörper als ein im Ringkanal axialbeweglich angeordneter Ventilring (9) ausgebildet ist, der in seiner Freigabestellung einen größeren Durchströmquerschnitt des Ringkanals freigibt als in seiner Dämpfungsstellung.

2. Bewegungsdämpfungselement nach Anspruch 1, wobei der Ventilkörper axialbeweglich zwischen der Dämpfungsstellung und je einer Freigabestellung beidseits der Dämpfungsstellung am Grundkörper gehalten ist.

3. Bewegungsdämpfungselement nach Anspruch 1 oder 2, wobei ein Ventilrückstellmittel (10, 11) zur Bereitstellung einer elastischen Rückstellkraft gegen eine Bewegung des Ventilkörpers aus seiner Dämpfungsstellung in Richtung Freigabestellung vorgesehen ist.

4. Bewegungsdämpfungselement nach einem der Ansprüche 1 bis 3, wobei der Ventilring axialbeweglich am Mittenkörper gehalten ist.

5. Bewegungsdämpfungselement nach Anspruch 3 oder 4, wobei das Ventilrückstellmittel wenigstens eine am Mittenkörper angeordnete Schraubenfeder (10, 11) beinhaltet.

6. Bewegungsdämpfungselement nach einem der Ansprüche 1 bis 5, wobei der Ringkanal vollständig geschlossen oder mit einem reduzierten Durchströmquerschnitt teiloffen ist, wenn sich der Ventilkörper in seiner Dämpfungsstellung befindet.

7. Bewegungsdämpfungselement nach einem der Ansprüche 1 bis 6, wobei im Mittenkörper ein vom Ventilkörper unbeeinflusster Mittenkanal (26) ausgebildet ist, der strömungstechnisch parallel zum Ringkanal ist.

8. Fluidführende, längenveränderliche Teleskoprohrleitung, insbesondere für eine Sanitärleitung, mit
- wenigstens zwei teleskopartig axialbeweglich aneinander geführten Rohrstücken (14a, 14b) und
- einem in einem der beiden Rohrstücke fixierten Bewegungsdämpfungselement (1),
- wobei das Bewegungsdämpfungselement ein solches nach einem der Ansprüche 1 bis 7 ist.

9. Teleskoprohrleitung nach 8, wobei sie als sanitäre Kopfbrausenleitung ausgebildet ist und das Bewegungsdämpfungselement an einem Teleskopende eines inneren der Rohrstücke oder an einem Kopfbrausenanschlussende der Kopfbrausenleitung angeordnet ist.

## Claims

1. A movement damper element for a fluid-conducting, length-variable piping (14), comprising
- a base body (2, 3) passed through by fluid conducted in the piping and
- a valve body (9) actuated by a pressure of the fluid conducted in the piping and movably retained on the base body between a damper position and an enable position, where in the enable position as compared to the damper position the valve body enables a larger flow passage cross section of the base body,
- wherein the base body includes a center body (2) and an exterior body (3) surrounding the center body thereby forming an intermediate annular duct (4), and the valve body is designed as a valve ring (9) disposed to be axially movable in the annular duct, the valve ring in its enable position enabling a larger flow passage cross section of the annular duct than in its damper position.

2. The movement damper element according to claim 1, wherein the valve body is retained on the base body axially movable between the damper position and an enable position on each of both sides of the damper position, respectively.

3. The movement damper element according to claim 1 or 2, wherein a valve reset means (10, 11) is provided for providing an elastic reset force to counteract a movement of the valve body from the damper position in the direction of the enable position.

4. The movement damper element according to any one of claims 1 to 3, wherein the valve ring is retained axially movable on the center body.

5. The movement damper element according to claim 3 or 4, wherein the valve reset means includes at least one helical spring (10, 11) disposed on the center body.

6. The movement damper element according to any one of the claims 1 to 5, wherein the annular duct is completely closed or partially open with a reduced flow passage cross section, when the valve body is in its damper position.

7. The movement damper element according to any one of the claims 1 to 6, wherein a center duct (26) is formed in the center body, which duct is unaffected by the valve body and is fluidly in parallel to the annular duct.

8. A fluid-conducting, length-variable telescope piping, preferably for a sanitary piping, comprising
- at least two telescoping axially movable pipe sections (14a, 14b) and
- a movement damper element (1) fixed in one of the two pipe sections,
- wherein the movement damper element is one according to any one of claims 1 to 7.

9. The telescope piping according to claim 8, wherein it is designed as a sanitary overhead shower piping, and the movement damper element is arranged on one telescope end of an inner one of the pipe sections or on an overhead shower connector end of the overhead shower piping.

## Revendications

1. Élément d'atténuation de mouvement pour une conduite tubulaire (14) menant un fluide et présentant une longueur variable, comportant
- un corps de base (2, 3) traversé par le fluide mené dans la conduite tubulaire, et
- un corps de valve (9) qui est actionné par la pression du fluide mené dans la conduite tubulaire et qui est retenu sur le corps de base de façon mobile entre une position d'atténuation et une position de libération dans laquelle il libère, par comparaison à la position d'atténuation, une section transversale d'écoulement plus grande du corps de base,
- le corps de base comprenant un corps central (2) et un corps extérieur (3) entourant le corps central en formant un canal annulaire interposé (4), et le corps de valve étant réalisé sous forme d'anneau de valve (9) qui est agencé de façon axialement mobile dans le canal annulaire et qui libère, dans sa position de libération, une section transversale d'écoulement plus grande du canal annulaire que dans sa position d'atténuation.

2. Élément d'atténuation de mouvement selon la revendication 1, dans lequel le corps de valve est retenu sur le corps de base de façon axialement mobile entre la position d'atténuation et une position de libération respective de part et d'autre de la position d'atténuation.

3. Élément d'atténuation de mouvement selon la revendication 1 ou 2, dans lequel est prévu un moyen de rappel de valve (10, 11) pour assurer une force de rappel élastique à l'encontre du mouvement du corps de valve depuis sa position d'atténuation en direction de la position de libération.

4. Élément d'atténuation de mouvement selon l'une des revendications 1 à 3, dans lequel l'anneau de valve est retenu sur le corps central de façon axialement mobile.

5. Élément d'atténuation de mouvement selon la revendication 3 ou 4, dans lequel le moyen de rappel de valve contient au moins un ressort hélicoïdal (10, 11) agencé sur le corps central.

6. Élément d'atténuation de mouvement selon l'une des revendications 1 à 5, dans lequel le canal annulaire est complètement fermé ou est partiellement ouvert avec une section transversale d'écoulement réduite lorsque le corps de valve se trouve dans sa position d'atténuation.

7. Élément d'atténuation de mouvement selon l'une des revendications 1 à 6, dans lequel un canal central (26) est réalisé dans le corps central, qui n'est pas influencé par le corps de valve et qui est parallèle au canal annulaire en termes d'écoulement.

8. Conduite tubulaire télescopique menant un fluide et présentant une longueur variable, en particulier pour une conduite sanitaire, comportant
- au moins deux tronçons tubulaires (14a, 14b) guidés en déplacement axial l'un contre l'autre de façon télescopique, et
- un élément d'atténuation de mouvement (1) fixé dans l'un des deux tronçons tubulaires,
- l'élément d'atténuation de mouvement étant un élément tel que défini selon l'une des revendications 1 à 7.

9. Conduite tubulaire télescopique selon la revendication 8 qui est réalisée sous la forme d'une conduite tubulaire pour douche de tête et l'élément d'atténuation de mouvement est agencé à une extrémité télescopique d'un tronçon intérieur des tronçons tubulaires ou à une extrémité de raccordement de douche de tête de la conduite de douche de tête.
